# EUROPEAN PATENT SPECIFICATION

(11) **EP 1 751 974 B1**
(45) Date of publication and mention of the grant of the patent: **20.11.2013**
(21) Application number: 04781158.3
(22) Date of filing: 13.08.2004
(51) Int. Cl.: H04N 5/44, H04N 5/21, H04N 7/173

(54) **A FILTER CONFIGURATION FOR A RECEIVER OF MULTIPLE BROADCAST STANDARD SIGNALS**
FILTERKONFIGURATION FÜR EINEN EMPFÄNGER VON SIGNALEN MEHRERER AUSSTRAHLUNGSSTANDARDS
ENSEMBLE FILTRE POUR UN RECEPTEUR RECEVANT PLUSIEURS SIGNAUX ETALONS DE RADIODIFFUSION

(30) Priority: 19.05.2004 US 572335 P
(43) Date of publication of application: 14.02.2007
(73) Proprietor: Thomson Licensing, 92130 Issy-les-Moulineaux (FR)
(72) Inventor: ECOFF, Clint, Alan, Indianapolis, Indiana 46220 (US)
(74) Representative: Arnold, Klaus-Peter
(86) International application number: PCT/US2004/026427
(87) International publication number: WO 2005/120054

(56) References cited:
- US-A- 4 792 993
- US-A- 4 903 332
- US-A- 5 673 088
- US-A- 6 005 640
- US-A1- 2001 033 625
- US-A1- 2002 008 787
- US-A1- 2004 004 674
- US-A1- 2004 061 804
- US-A1- 2004 061 804
- US-B1- 6 550 063

## Description

### FIELD OF THE INVENTION

The present invention relates generally to broadcast signal receivers and, more particularly, to a surface acoustic wave Saw filter configuration for demodulation of multiple broadcast standard signals.

### DESCRIPTION OF THE RELATED ART

Current receiver designs capable of receiving multiple broadcast standards' signals such as quadrature amplitude modulation QAM, Advanced Television Systems Committee ATSC and National Television System Committee NTSC require multiple expensive SAW filters in order to achieve the desired channel selectivity.

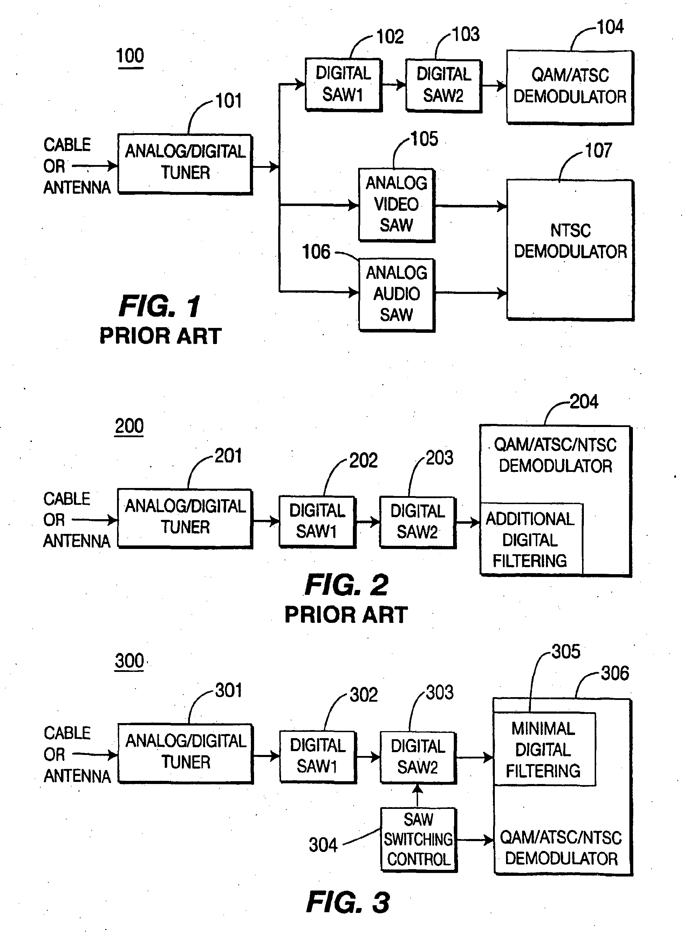

Various high definition television HDTV and set top box STB designs have utilized 4 SAW filters with multiple demodulators to demodulate QAM, ATSC and NTSC signals. A block diagram 100 of such a multiple SAW filter demodulator is shown in Figure 1. The digital signal from the Analog/Digital tuner 101 is sent to a path of serial Digital Saw filters Digital SAW1 and Digital SAW2 102,103 connected to a QAM/ATSC demodulator 104. Analog signal from the tuner 101 is sent to a parallel path of an analog video SAW filter 105 and an analog audio SAW filter 106 coupled to an NTSC demodulator.

Other known receiver systems include arrangements similar to that of Figure 1. Additional filtering is done digitally, where a reduction of SAW filters is employed. The additional digital filtering is an added cost premium to the overall cost of the receiver. In such a system, both SAW and SAW 2 filters are of equal wide bandwidths. However, in certain modes, such as QAM or ATSC the additional digital filtering is required. An example of employing a dual SAW filter arrangement is exemplified by the block diagram 200 of Figure 2. the digital output from the tuner 201 is passed through a series path of digital SAW1 202 and digital SAW2 filters that output to additional digital filtering in a QAM/ATSC demodulator 204. Furthermore, a design employing the dual SAW filter arrangement of Figure 2 requires a Nyquist slope digital filter for the NTSC demodulation. This Nyquist slope filtering is an additional required cost.

The system described by US A 5 673 088 (NAH IL-KOO) uses a plurality of SAW filters (S1, S2, 32) and a first switching unit according to a control signal depending on the broadcast signal being received, The signal is applied to either a first SAW filter S1 which is adapted for the NTSC broadcast mode or a second SAW filter S2 which is adapted for the other broadcast modes, according to the position of first switching unit 24 and then to a plurality of trap filters (26) in parallel to filter different frequencies.

The system described by US 2002/0008787 A1 (Kurihara) uses three SAW filters (S1, S2, S3). Filter S1 has excellent characteristics for both an analog broadcast and a digital broadcast. Filter S2 is a filter for an analog broadcast, while filter S3 is a filter for the digital broadcast. Based on the broadcast mode, only S2 or S3 is used so that the cascade (S1, S2) is used for the analog broadcast, and the cascade (S1, S3) is used for the digital broadcast.

Accordingly, there is a need for a minimal SAW filter arrangement for demodulation of multiple broadcast standards signals..

### SUMMARY OF THE INVENTION

The invention is as set out in independent claim 1.

A multiple broadcast standards receiver arrangement includes a tuner for receiving a one of multiple broadcast signals, a first filter coupled to receive an output from the tuner, a second filter coupled to an output of the first filter, the second filter having a variable bandwidth response, a demodulator for an output from the second filter, and a filter control responsive to the one of multiple broadcast signals for controlling the variable bandwidth response of the second filter.

A filter arrangement for a receiver for multiple broadcast signals includes a first filter for receiving a broadcast signal from a tuner, a second filter coupled to an output of the first filter, the second filter having a variable bandwidth response, the second filter providing an output for a demodulator; and a filter control responsive to the broadcast signal for controlling the variable bandwidth response of the second filter.

A method for filtering one of multiple received broadcast standards signals comprising the steps of filtering a received broadcast signal with a first filter having a first frequency bandwidth response, filtering an output from the first filter with a second filter having a variable bandwidth response, and controlling the variable bandwidth response of the second filter in response to the received broadcast signal.

### BRIEF DESCRIPTION OF THE DRAWINGS

A more complete understanding of the present invention may be obtained from consideration of the following description in conjunction with the drawings, in which:
Figure 1 is a block diagram of a prior art receiver design employing 4 digital SAW filters with multiple demodulators to demodulate QAM, ATSC and NTSC signals;
Figure 2 is a block diagram of a prior art receiver arrangement employing 2 SAW filters ;
Figure 3 shows a block diagram 300 of an exemplary SAW filter arrangement in accordance with the invention;
Figure 4 shows an exemplary frequency response curve 400 for the digital SAW 1 filter 302 in figure 3;
Figure 5 shows a response curve plot for the digital SAW2 filter 303 in Figure 3; and
Figure 6 shows two distinct frequency responses from cascading the digital SAW 1 filter and bandwidth switchable digital SAW2 filter of Figure 3.

To facilitate understanding, identical reference numerals have been used, where possible, to designate identical elements that are common to the figures.

### DETAILED DESCRIPTION

Referring to Figure 3 there is shown a block diagram 300 of an exemplary SAW filter arrangement in accordance with the invention. The analog/digital tuner 301 receiving a broadcast signal over cable or antenna outputs through a series path of digital SAW1 and digital SAW2 filters 302,303 to a QAM /ATSC/NTSC broadcast standards' demodulator 305. The digital SAW2 filter has a switchable bandwidth responsive to a SAW switching control 304 tied from the SAW filter 303 back to the demodulator. The additional digital filtering for accommodating NTSC broadcast signals is minimal compared to that of prior dual SAW filter designs without switchable bandwidth control.

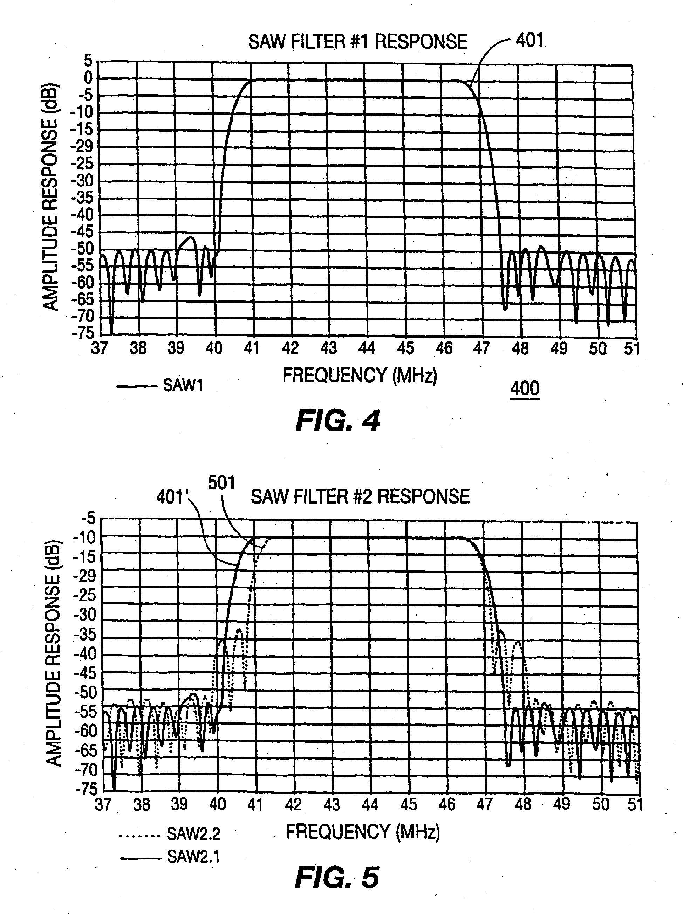

An exemplary frequency response curve 400 for the digital SAW1 filter 302 is shown in Figure 4. The digital SAW 1 frequency response 401 is essentially flat between the upper and lower cutoff frequencies of the desired channel.

A response curve plot 500 for the digital SAW2 filter 303 is shown in Figure 5. The digital SAW2 filter exhibits in one mode a response curve 401' identical to that of digital SAW1 filter shown in Figure 4 and a reduced bandwidth frequency response 501 in a switched mode.

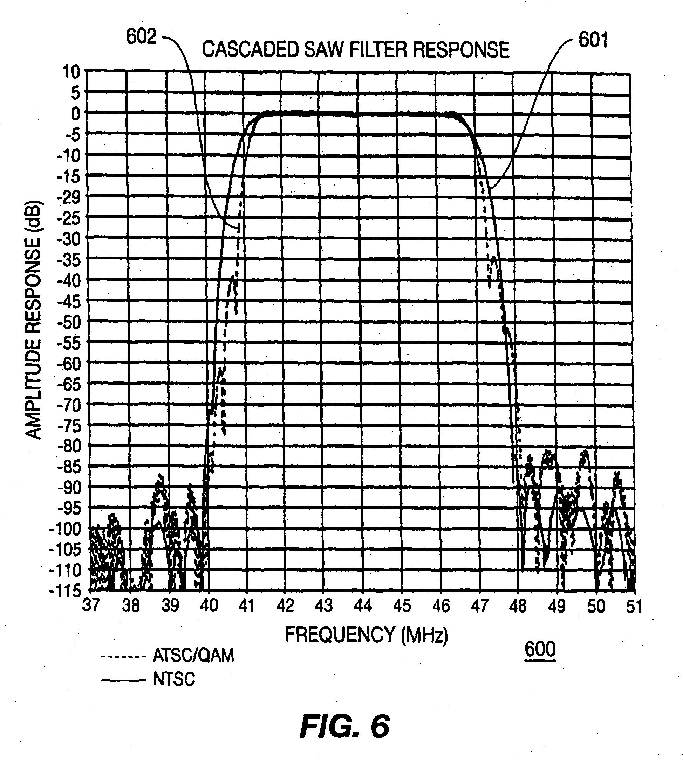

Cascading the digital SAW1 filter and bandwidth switchable digital SAW2 filter provides for two distinct frequency responses 600, shown in Figure 6. The wider bandwidth curve 601 allows full bandwidth of NTSC broadcast signals to pass (video and audio) to the demodulator 305. The narrower bandwidth curve allows full bandwidth of QAM and ATSC standards signals to pass to the demodulator 305, while improving selectivity in this mode. It is not desirable to pass NTSC signals through the narrower QAM/ATSC bandwidth path. Doing so would remove the NTSC sound carrier (41.25 MHz), which necessitates the need for a switchable bandwidth SAW filter design.

Although various embodiments which incorporate the teachings of the present invention have been shown and described in detail herein, those skilled in the art can readily devise many other varied embodiments that will still incorporate these teachings.

## Claims

1. A multiple broadcast standards receiver arrangement comprising:
a tuner (301) for tuning of analog and digital broadcast signals, for receiving one of multiple broadcast signals;
a first filter (302) coupled to receive an output from said tuner, and
a second filter (303) coupled to an output of said first filter (302), **characterized in that**
said first and second filters (301, 303) are digital surface acoustic wave filters,
said second filter has a bandwidth response switchable between a first frequency bandwidth response and a second frequency bandwidth response, said first frequency bandwidth response being identical to that of a frequency bandwidth response for said first filter (302), and said second frequency bandwidth response being narrower than said frequency bandwidth response for said first filter (302);
a single demodulator for an output from said second filter (303); and
a filter control (304) responsive to said one of multiple broadcast signals for controlling said switchable bandwidth response of said second filter (303).

2. The receiver arrangement of claim 1, wherein said first filter (302) passes QAM and ATSC broadcast signals received.

3. The receiver arrangement of claim 2, wherein said second filter (303) passes NTSC broadcast signals.

4. The receiver arrangement of claim 1, wherein said demodulator comprises a digital filter (306) for said output from said second filter.

## Patentansprüche

1. Empfängeranordnung für mehrere Rundfunknormen, wobei die Empfängeranordnung umfasst:
einen Tuner (301) zum Abstimmen analoger und digitaler Rundfunksignale zum Empfangen eines von mehreren Rundfunksignalen;
ein erstes Filter (302), das zum Empfangen einer Ausgabe von dem Tuner gekoppelt ist, und
ein zweites Filter (303), das mit einem Ausgang des ersten Filters (302) gekoppelt ist, **dadurch gekennzeichnet, dass**
das erste und das zweite Filter (301, 303) digitale Oberflächenwellenfilter sind,
wobei das zweite Filter einen Bandbreitenfrequenzgang aufweist, der zwischen einem ersten Bandbreitenfrequenzgang und einem zweiten Bandbreitenfrequenzgang schaltbar ist, wobei der erste Bandbreitenfrequenzgang gleich einem Bandbreitenfrequenzgang für das erste Filter (302) ist und der zweite Bandbreitenfrequenzgang schmaler als der Bandbreitenfrequenzgang für das erste Filter (302) ist; einen einzelnen Demodulator für eine Ausgabe von dem zweiten Filter (303); und
eine Filtersteuerung (304) in Ansprechen auf das eine von mehreren Rundfunksignalen zum Steuern des schaltbaren Bandbreitenfrequenzgangs des zweiten Filters (303).

2. Empfängeranordnung nach Anspruch 1, wobei das erste Filter (302) empfangene QAM- und ATSC-Rundfunksignale durchlässt.

3. Empfängeranordnung nach Anspruch 2, wobei das zweite Filter (303) NTSC-Rundfunksignale durchlässt.

4. Empfängeranordnung nach Anspruch 1, wobei der Demodulator ein Digitalfilter (306) für die Ausgabe von dem zweiten Filter umfasst.

## Revendications

1. Un ensemble récepteur de plusieurs signaux étalons de radiodiffusion comprenant :
un syntoniseur (301) pour la syntonisation des signaux de radiodiffusion analogiques et numériques, pour la réception d'un signal parmi plusieurs signaux étalons de radiodiffusion ;
un premier filtre (302) couplé pour recevoir une sortie dudit syntoniseur, et
un second filtre (303) couplé à une sortie dudit premier filtre (302), **caractérisé en ce que**
lesdits premier et second filtres (302, 303) sont des filtres numériques d'onde acoustique de surface,
ledit second filtre dispose d'une réponse de bande passante commutable entre une première réponse de bande passante de fréquence et une seconde réponse de bande passante de fréquence, ladite première réponse de bande passante de fréquence étant identique à celle d'une réponse de bande passante de fréquence pour ledit premier filtre (302), et ladite seconde réponse de bande passante de fréquence étant plus étroite que ladite réponse de bande passante de fréquence pour ledit premier filtre (302) ;
un unique démodulateur pour une sortie dudit second filtre (303) ; et
une commande de filtre (304) réactive audit signal parmi plusieurs signaux de radiodiffusion pour commander ladite réponse de bande passante commutable dudit second filtre (303).

2. L'ensemble récepteur de la revendication 1, dans lequel ledit premier filtre (302) laisse passer des signaux QAM et ATSC reçus.

3. L'ensemble récepteur de la revendication 2, dans lequel ledit second filtre (303) laisse passer des signaux de radiodiffusion NTSC.

4. L'ensemble récepteur de la revendication 1, dans lequel ledit démodulateur comprend un filtre numérique (306) pour ladite sortie dudit second filtre.
